# EUROPÄISCHE PATENTANMELDUNG

(11) **EP 1 247 438 A1**
(43) Veröffentlichungstag der Anmeldung: **09.10.2002**
(21) Anmeldenummer: 02001840.4
(22) Anmeldetag: 26.01.2002
(51) Int. Cl.: A01D 33/10

(54) **Erntemaschine**

(30) Priorität: 06.04.2001 DE 10117415
(71) Anmelder: Holmer Maschinenbau GmbH, 84069 Eggmühl (DE)
(72) Erfinder: Holmer, Alfons, 84069 Eggmühl (DE)
(74) Vertreter: Graf, Helmut, Dipl.-Ing.

(57) **Zusammenfassung**

Die Erfindung bezieht sich auf eine neuartige Erntemaschine (1) zum Ernten bzw. Roden von Wurzelfrüchten, insbesondere Kartoffeln, mit wenigstens einem an einem Fahrzeugrahmen (2) vorgesehenen, an einer Oberseite offenen Bunker (13) sowie mit einem an die offene Seite des Bunkers (13) reichenden Zuförderer (15,20), beispielsweise Aufwärtsförderer (15,20) zum Zuführen der geernteten Hackfrüchte an eine Belade- oder Füllposition an der offenen Oberseite des Bunkers (13).

## Beschreibung

Die Erfindung bezieht sich auf eine Erntemaschine gemäß Oberbegriff Patentanspruch 1.

Bekannt ist eine Fördereinrichtung für einen Bunker (DE 38 27 277 C2) mit einem Aufwärtsförderer und mit einem daran anschließenden Füllförderer, der zur Erzielung eines möglichst optimalen Füllens des Bunkers um eine horizontale oder annähernd horizontale Achse zu seiner Förderrichtung schwenkbar ist, und zwar zwischen einer dem Boden des Bunkers nahen Position und einer diesem Boden fernen Position.

Aufgabe der Erfindung ist es, eine Erntemaschine dahingehend zu verbessern, daß bei einem optimalen Füllen des wenigstens einen Bunkers auch ein schonendes Einbringen des Erntegutes in diesen Bunker möglich ist. Zur Lösung dieser Aufgabe ist eine Erntemaschine entsprechend dem Patentanspruch 1 ausgebildet.

Die Besonderheit der erfindungsgemäßen Erntemaschine besteht darin, daß das Einbringen des Erntegutes in den wenigstens einen Bunker nicht unmittelbar über den Zuführförderer, der vorzugsweise ein Elevator bzw. Aufwärtsförderer ist, erfolgt, sondern über wenigstens einen an diesen Zuführförderer anschließenden und im Bereich des Bunkers vorgesehenen Füllförderer. Dieser Füllförderer besitzt dann wenigstens ein beispielsweise von einem Füllband gebildetes Förderelement, über welches ein sanftes und schonendes Einbringen oder Ablegen des Erntegutes in den Bunker erfolgt, und zwar beginnend von einer ersten Seite, beispielsweise der rückwärtigen oder vorderen Seite des Bunkers zunehmend zu der dieser ersten Seite gegenüberliegenden zweiten Seite, die dann beispielsweise die vordere Seite oder rückwärtige Seite des Bunkers ist. Beim Einbringen des Erntegutes in den Bunker ist das Förderelement des Füllförderers unabhängig von seiner Schwenkstellung und auch unabhängig von seiner Position bezüglich der Verschiebe- oder Lateralbewegung so angeordnet, daß es in Förderrichtung an den Zuförderer anschließt.

Am Beginn des Einbringens des Erntegutes in den Bunker ist das Füllelement des Füllförderers um die Schwenkachse derart geschwenkt, daß es mit seinem einen Ende bis in die Nähe des Bodens des Bunkers im Bereich der ersten Seite reicht, von der aus das Füllen des Bunkers erfolgen soll. Mit dem Einbringen des Erntegutes über das Förderelement des Füllförderers entsteht ein Ernteguthaufen. Mit wachsender Höhe dieses Ernteguthaufens wird das Förderelement des Füllförderers zunehmend nach oben geschwenkt, so daß das freie Ende immer sich in einem geringen Abstand über der Oberseite des Haufens befindet und jedes neue Erntegut von diesem Förderelement sanft auf die Oberseite des Haufens abgelegt wird. Der Ernteguthaufen bildet einen Schüttkegel aus, der auch der anderen Seite des Bunkers zugewandt ist. Sobald der Ernteguthaufen eine vorgegebene Höhe erreicht hat, wird das Förderelement des Füllförderers mit dem weiteren Einbringen des Ernteguts in Richtung auf das andere Ende des Bunkers hin bewegt, so daß über das in die oberste Stellung geschwenkte Förderelement des Füllförderers nun Erntegut jeweils am oberen Bereich des Schüttkegels zunehmend abgelegt wird und sich dieser Schüttkegel und damit auch der Ernteguthaufen mit zunehmendem Einbringen des Erntegutes in Richtung auf die anderen Seite des Bunkers wächst.

Um insbesondere für diese Lateral- bzw. Verschiebebewegung eine möglichst kurze Wegstrecke zu erreichen, ist bei einer bevorzugten Ausführungsform der Erfindung der Füllförderer so ausgebildet, daß etwa ab der Mitte zwischen den beiden Seiten des Bunkers die Förderrichtung des Förderelementes des Füllförderers umgekehrt wird, so daß dann das zweite Ende des Förderelementes des Füllförderers die bisherige Funktion des ersten Endes übernimmt und über dieses zweite Ende dann etwa ab der Mitte des Bunkers das Erntegut auf den oberen Bereich des Böschungswinkels abgelegt wird, und zwar wiederum bei in Richtung auf die zweite Seite des Bunkers bewegtem Förderelement. Das Füllen ist abgeschlossen, wenn das Erntegut die andere Seite des Bunkers erreicht hat.

Das Schwenken des Förderelementes des Füllförderers sowie auch die Lateral- oder Verschiebebewegung erfolgen durch einen entsprechenden Antrieb, beispielsweise durch wenigstens einen Hydraulikzylinder und/oder Hydraulikmotor, und zwar vorzugsweise gesteuert durch Sensoren, beispielsweise Lichtschranken oder andere geeignete Sensoren, die die Ausbildung des Ernteguthaufens und des jeweiligen Schüttkegels im Bunker überwachen.

Das Förderelement des Füllförderers ist beispielsweise ein Förderband oder Füllband. Weiterhin ist es beispielsweise vorgesehen,
daß das Förderelement des Füllförderers zwischen einer Rückseite und einer Vorderseite des Bunkers verschiebbar geführt ist,
und/oder,
daß der wenigstens eine Zuförderer ein Aufwärtsförderer oder Elevator ist, der einen über dem Förderelement des Füllförderers endenden Förderabschnitt bildet,
und/oder
daß das Förderelement des Füllförderers an einem Ende schwenkbar gehalten ist, und/oder
daß das Förderelement des Füllförderers an einem Rahmen um die Gelenkachse schwenkbar vorgesehen ist, der (Rahmen) für die Verschiebe- oder Lateralbewegung beweglich vorgesehen ist,
und/oder
daß das Förderelement des Füllförderers in einem Förderelement- oder Förderbandrahmen um die Gelenkachse schwenkbar vorgesehen ist, und daß der Förderelementrahmen für die Lateralbewegung in der zweiten Achsrichtung (E) verschiebbar vorgesehen ist,
und/oder
daß das Förderelement des Füllförderers in der ersten und zweiten Position seiner Verschiebe- oder Lateralbewegung mit dem einen bzw. mit dem anderen Ende unter der Aufgabeposition des Zuförderers angeordnet ist,
und/oder
daß der Träger oder Rahmen für die Verschiebebewegung an Lagern geführt ist, und/oder
daß der Rahmen oder Träger für die Verschiebe- oder Lateralbewegung auf einer an der Oberseite konkav gekrümmten Bahn bewegbar ist, die um wenigstens eine parallel zur Gelenkachse verlaufende Achse gekrümmt ist,
und/oder
daß Antriebe für die Schwenkbewegung und Verschiebebewegung des Förderelementes des Füllförderers und/oder
Mittel oder Sensoren vorgesehen sind, die die Schwenkbewegung und/oder die Verschiebebewegung des wenigstens einen Förderelementes des Füllförderers in Abhängigkeit von dem Füllzustand des Bunkers steuern,
und/oder
daß die Förderrichtung des Förderelementes des Füllförderers umkehrbar ist,
und/oder
daß das Förderelement des Füllförderers in einer ersten Position der Verschiebebewegung mit einem Ende der einen Seite und in einer zweiten Position der Verschiebebewegung mit seinem anderen Ende der anderen Seite des Bunkers benachbart angeordnet ist,
und/oder
ein an der Vorderseite des Fahrzeugrahmens ein Ernte- oder Rodeaggregat und eine Förderstrecke zwischen diesem Rodeaggregat und einer Aufnahmeposition des Zuförderers vorgesehen sind, an der die Hackfrüchte von der Förderstrecke an den Zuförderer übergeben werden,
und/oder
daß die Aufgabeposition des Zuförderers in der Mitte oder etwa in der Mitte zwischen den beiden einander gegenüberliegenden Seiten des Bunkers vorgesehen ist, und/oder
daß der Füllförderer vorzugsweise zumindest mit einem Teil des Zuförderers (15) anhebbar und absenkbar am Bunker (13) oder an der Erntemaschine (1) vorgesehen ist, und/oder
daß der Fahrzeugrahmen zweiteilig ausgeführt ist, und zwar mit einem Vorderrahmen und einem Hinterrahmen, wobei am Vorderrahmen das Rodeaggregat sowie wenigstens ein Fahrstand und am Hinterrahmen der Bunker vorgesehen sind, und/oder
daß der Vorderrahmen und der Hinterrahmen über eine Gelenkeeinrichtung gelenkig miteinander verbunden sind, und/oder
daß am Hinterrahmen ein Antriebsmotor für die selbstfahrende Erntemaschine vorgesehen ist.

Weiterbildungen der Erfindung sind Gegenstand der Unteransprüche. Die Erfindung wird im Folgenden anhand der Figuren an einem Ausführungsbeispiel näher erläutert.
Es zeigen:
- Fig. 1: in Seitenansicht eine selbstfahrende Hackfruchterntemaschine zum Ernten bzw. Roden von Hackfrüchten und dabei speziell von Kartoffeln;
- Fig. 2: in vereinfachter Darstellung einen Querschnitt durch den Bunker der an der Maschine der Figur 1 im Bereich eines Aufwärtsförderers;
- Fig. 3 - 5: in schematischer Darstellung die verschiedenen Bewegungen des Füllbandes bzw. des Füllbandrahmens zum schonenden Einbringen der Hackfrüchte bzw. Kartoffeln in den Bunker des Erntefahrzeugs;
- Fig. 6: eine Draufsicht auf das Füllband und den Füllbandrahmen der Erntemaschine gemäß Figur 1.

Die in den Figuren allgemein mit 1 bezeichnete Erntemaschine dient zum mehrreihigen Ernten bzw. Roden von Hackfrüchten und dabei speziell zum Ernten von Kartoffeln. Sie besteht im wesentlichen aus einem Fahrzeugrahmen 2, der zweiteilig ausgebildet ist und sich aus dem Vorderrahmen 2' und dem Hinterrahmen 2" zusammensetzt. Beide Rahmen sind bei 3 über eine Gelenkeinrichtung 3, die ein Gelenk, einen Hebel oder Lenker sowie Arbeitszylinder aufweist, derart miteinander verbunden, daß u.a. Knick- und Schwenkbewegungen zwischen dem Vorderrahmen 2' und dem Hinterrahmen 2" gesteuert um eine vertikale Achse sowie auch um eine Längsachse des Hinterrahmens 2" bzw. des Vorderrahmens 2' möglich sind.

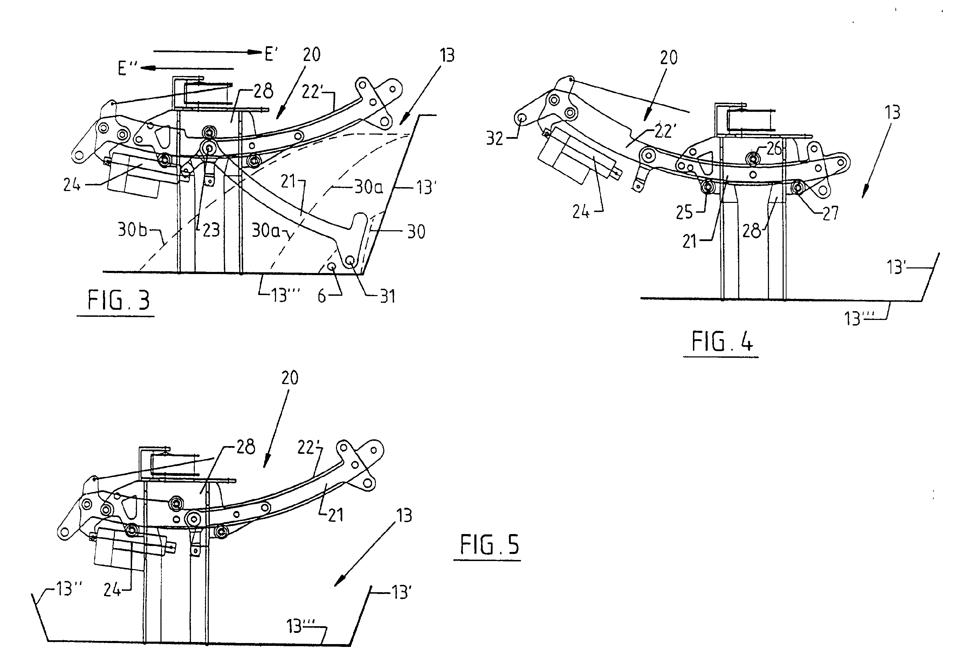

Auf dem Vorderrahmen 2' befindet sich die Fahrer 4. Weiterhin ist frontseitig am Vorderrahmen 2' das bei Vorwärtsfahrt (Pfeil A) im Fahrzeugrahmen 2 vorauseilende Rode- und Ernteaggregate 5 vorgesehen, mit welchem das mehrreihige Ernten der Hackfrüchte, d.h. der Kartoffeln 6 (Figur 3) möglich ist. Das Ernte- und Rodeaggregat 5 besitzt die dem Fachmann von Kartoffelerntemaschinen bekannte Ausbildung.

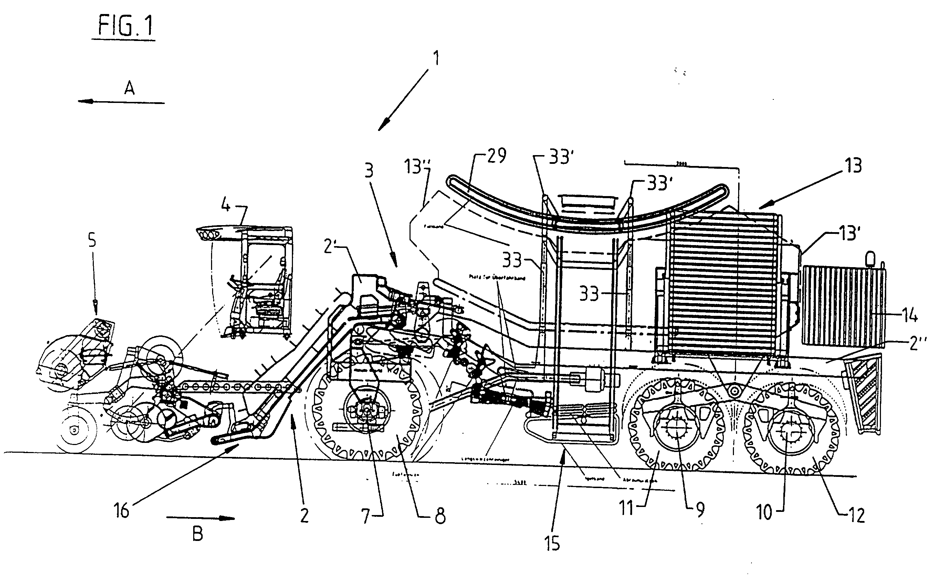

Bei der dargestellten Ausführungsform ist die Hackfruchterntemaschine 1 dreiachsig ausgebildet, und zwar mit der in der Figur 1 allgemein mit 7 bezeichneten Vorderachse, die lenkbar am Vorderrahmen 2' vorgesehen ist und die beiden Vorderräder 8 aufweist.

Zwei weitere Fahrzeugachsen 9 und 10 mit den zugehörigen Rädern sind am Hinterrahmen 2" vorgesehen. Auf dem Hinterrahmen 2" befindet sich unmittelbar an der Gelenkanordnung 3 anschließend der Bunker 13 zur Aufnahme des Ernteguts, d.h. bei der dargestellten Ausführungsform der Kartoffeln 6. Weiterhin ist am Hinterrahmen 2" heckseitig der Antriebsmotor 14 vorgesehen, über den sowohl die hinteren Fahrzeugachsen 9 und 10, als auch - über einen geeigneten mechanischen Antriebsstrang oder aber hydraulisch - die vordere Radachse 7 bzw. deren Räder 8 angetrieben sind.

Zwischen dem Ernte- und Rodeaggregat 5 und einem an einer Seite der Hackfruchterntemaschine 1 etwa in der Mitte des Bunkers 13 vorgesehenen Aufwärtsförderer 15 (Elevator) zum Beladen des Bunkers 13 mit den Kartoffeln 6 ist eine Förderstrecke für diese Kartoffeln gebildet. Diese in der Figur 1 allgemein mit 16 bezeichnete Förderstrecke besteht aus mehreren in Förderrichtung dieser Förderstrecke aneinander anschließenden Förder- oder Funktionselementen, die in an sich bekannter Weise u.a. auch Förder- oder Trennsterne, Siebbänder usw. umfassen, und zwar für ein Trennen des Erntegutes von Fremdkörpern, wie Erdklumpen, Steinen, Kraut usw. Die Förderrichtung der Förderstrecke 16 ist mit dem Pfeil B angedeutet, d.h. diese verläuft entgegengesetzt zur Fahrtrichtung A.

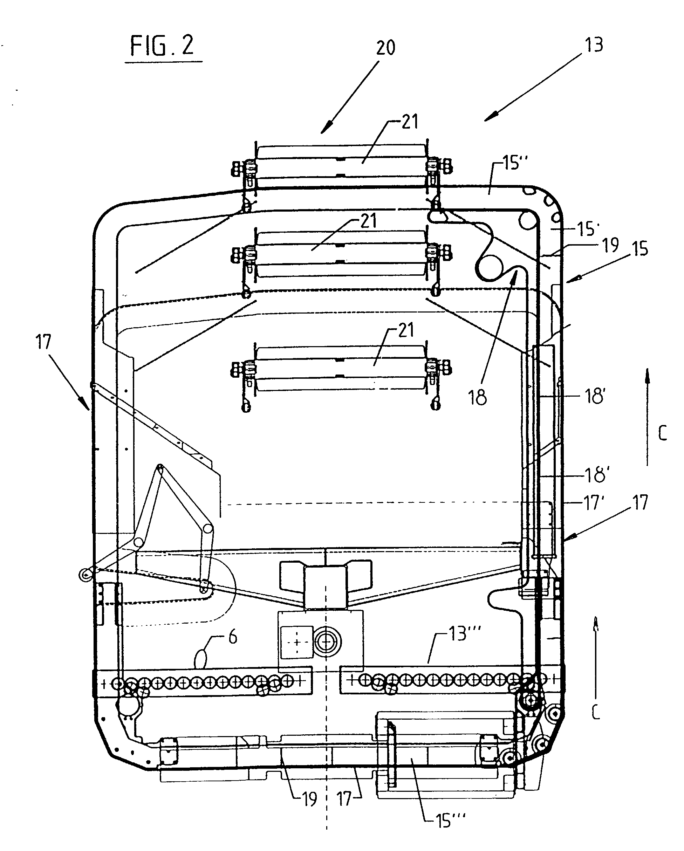

Wie in der Figur 2 dargestellt ist, besteht der Aufwärtsförderer 15 im wesentlichen aus zwei Bändern 17 und 18, die insbesondere auch im Bereich eines vertikalen Förderabschnittes 15' und eines anschließenden horizontalen Förderabschnittes 15" dieses Aufwärtsförderers im Verwendungsfall dieses Aufwärtsförderers parallel zueinander verlaufende Förderbandlängen 17' und 18' bilden und so angetrieben sind, daß sich diese Längen gleichsinnig in Förderrichtung C des Aufwärtsförderers 15 bewegen.

Das äußere Förderband 17 umschließt den Bunker 13 an der Ober- und Unterseite und verläuft dort jeweils horitzontal senkrecht zur Längserstreckung des Hinterrahmens 2" sowie auch an den Längsseiten, d.h. an der die Förderstrecke 15' aufweisenden Längsseite und an der gegenüberliegenden Längsseite des Bunkers bzw. der Hackfruchterntemaschine. Das innen liegende Förderband 18 bzw. die von diesem Förderband gebildete Schlaufe erstreckt sich im wesentlichen nur im Bereich der Förderabschnitte 15' und 15". Dem Förderabschnitt 15' in Förderrichtung C vorausgehend ist noch ein unterer, im wesentlichen horizontaler Förderabschnitt 15"' gebildet, mit dem der Aufwärtsförderer 15 an die Förderstrecke 16 anschließt.

An der innen liegenden Seite ist das Förderband 15 mit einer Vielzahl von in Förderrichtung C aufeinander folgenden Mitnehmern 19 versehen, die Anlageflächen für die Kartoffeln 6 bilden. Es versteht sich, daß für die Förderbänder 17 und 18 Umlenkungen und Führungen vorgesehen sind, die aber außerhalb der Förderabschnitte angebracht sind.

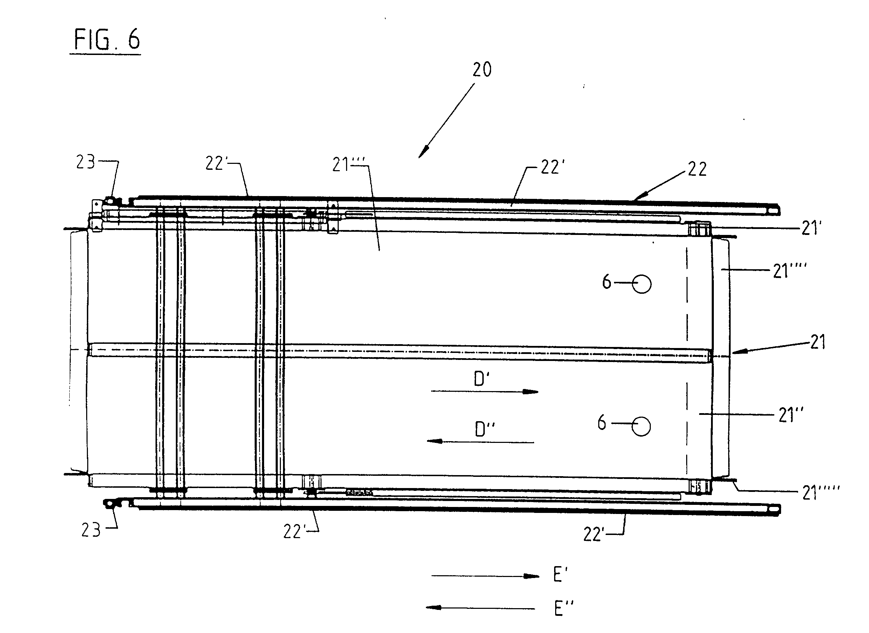

Mit dem Aufwärtsförderer 15 werden die Kartoffeln 6 also von der Förderstrecke 16 an die Oberseite des Bunkers gefördert und gelangen dort auf einen in den Figuren allgemein mit 20 bezeichneten Einlege- bzw. Ablegeförderer, mit dem die Kartoffeln 6 sanft und unter Vermeidung von Beschädigungen in den Bunker 13 abgelegt werden, und zwar in einer nachstehend noch näher beschriebenen Weise. Der Einlege- bzw. Füllförderer 20 besteht bei der dargestellten Ausführungsform im wesentlichen aus einem umlaufend angetriebenen Füllband 21 und einem Füllbandrahmen 22. Das Füllband 21 umfaßt einen Tragrahmen 21', in welchem beidendig Umlenkwalzen oder Umlenkrollen 21" drehbar gelagert sind, von denen wenigstens eine durch einen nicht dargestellten Antrieb, beispielsweise hydraulischen Antrieb gesteuert antreibbar ist. Über die beiden Umlenkwalzen 21 ist ein eine geschlossene Schlaufe bildendes Band aus einem für Förderbänder geeigneten Material geführt. Der Antrieb für das Füllband 21 bzw. das Bandelement 21''' ist in seiner Antriebsrichtung umschaltbar. Die Förderrichtung des Füllbandes 21 ist in der Figur 6 daher mit den Doppelpfeilen D' und D" angegeben.

An einem Ende ist das Füllband 21 bzw. dessen Tragrahmen 21' mittels eines Gelenks 23 um eine horizontale Achse senkrecht zur Längserstreckung bzw. Förderrichtung des Füllbandes 21 und parallel zu den Oberflächenseiten des Bandelementes 21''' schwenkbar am Füllbandrahmen 22 angelenkt. Durch einen Antrieb 24, der in den Figuren 3 - 5 schematisch und sehr vergrößert als zwischen dem Füllbandrahmen 22 und dem Tragrahmen 21' wirkender Hydraulik-Zylinder wiedergegeben ist, kann das Füllband 21 um die Achse des Gelenks 23 relativ zum Füllbandrahmen 22 geschwenkt werden. Der Füllbandrahmen 22 umfaßt u.a. zwei seitliche Rahmenelemente 22', zwischen denen das Füllband 21 angeordnet ist. Diese Rahmenelemente, an denen das Füllband 21 mit den Gelenken 23 angelenkt ist, sind jeweils mit einem Führungsprofil versehen oder bilden ein solches Führungsprofil, mit dem jedes Rahmenelement 22' zwischen wenigstens drei Rollen 25 - 27 geführt ist. Diese Rollen 25 - 27 sind jeweils an einem Lager 28 vorgesehen, und zwar derart, daß sie mit ihren Achsen parallel zueinander in horizontaler Richtung und quer bzw. senkrecht zur Längsachse des Hinterrahmens 2" angeordnet sind. Die beiden Lager 28 sind Bestandteil des Füllförderers 20 und beidseitig vom Füllbandrahmen 22 vorgesehen, so daß dieser zwischen den Lagern 28 angeordnet ist. Jede Rolle 25 - 27 an einem Lager 28 ist achsgleich mit der zugehörigen Rolle an dem anderen Lager angeordnet. Weiterhin bilden die Rollen 25 - 27, wie die Figuren 3 - 5 auch zeigen, mit ihren Achsen die Eckpunkte eines Dreiecks in der Weise, daß die Achsen der unteren Rollen 25 und 27 im wesentlichen in einer gemeinsamen horizontalen Ebene und die Rollen 26 mit ihren Achsen oberhalb dieser Ebene angeordnet sind, und zwar derart, daß jedes Rahmenelement 22 mit seiner unteren Längsseite in den beiden Rollen 25 und 27 und mit der oberen Längsseite in der Rolle 26 geführt ist. Wenigstens eine Rolle an jedem Lager 28, beispielsweise die dortige Rolle 27 ist angetrieben, so daß durch den Antrieb der Füllbandrahmen 22 mit dem Füllband 21 an den Lagern 28 geführt entsprechend den Pfeilen E' und E" hin- und herbewegbar ist, und zwar für eine Verschiebe- oder Lateralbewegung.

Bei der dargestellten Ausführungsform sind die Rahmenelemente 22 sichelartig gekrümmt ausgeführt, und zwar derart, daß die mit der Rolle 26 zusammenwirkende Oberseite konkave und die mit den Rollen 25 und 27 zusammenwirkende untere Längsseite des jeweiligen Rahmenelementes 22' die konvexe Seite bildet. Der Füllförderer 20 ist mittig im oberen Bereich des Bunkers 13 angeordnet, und zwar derart, daß die Förderrichtungen D' und D" des Füllbandes 21, aber auch die Bewegungsrichtungen E' und E" des Füllbandrahmens 22 in einer gemeinsamen vertikalen Ebene mit der Längserstreckung des Bunkers 13 bzw. des Hinterrahmens 2" liegen. Weiterhin ist die Anordnung bei der dargestellten Ausführungsform so getroffen, daß bezogen auf die Fahrtrichtung A das die Gelenke 23 aufweisende Ende des Füllbandes 21 dem diesen Gelenken entfernt liegenden freien Ende des Füllbandes 21 vorauseilt.

Um ein sanftes Ablegen der Kartoffeln 6 mit den Füllförderer 20 bzw. mit dem Füllband 21 zu erreichen, ist das Bandelement 21"' an seiner außenliegenden Seite mit mehreren Mitnehmern 21"" versehen. Außerdem weist das Bandelement einen Rand 21""' auf.

Der Füllförderer 20 ist mit seinen Lagern 28 derart im Bunker 13 gehalten, daß im normalen Betrieb der Aufwärtsförderer 15 mit seinem Förderabschnitt 15" geringfügig oberhalb des Füllbandes 15 endet.

Die Figuren 3 - 5 zeigen die Arbeitsweise des Füllförderers 20, mit dem es möglich ist, den großvolumigen Bunker 13 unter schonender Behandlung der Kartoffeln 6 möglichst vollständig zu füllen.

Das Füllen des Bunkers 13 mit den Kartoffeln 6 erfolgt ausgehend von dem rückwärtigen Ende 13' des Bunkers 13 her zunehmend zum vorderen Ende 13" des Bunkers 13. Zum Füllen wird zunächst der Füllbandrahmen 22 in Richtung zur Rückseite 13' des Bunkers 13 (Pfeil E') soweit bewegt, daß das freie Ende des Füllbandes 21 dieser Rückseite benachbart liegt. Im Bereich seines mit den Gelenken 23 versehenen Endes ist das Füllbandes 21 unterhalb des Förderabschnittes 15 angeordnet. Das Füllband 21 ist weiterhin um die Achsen der Gelenke 23 nach unten geschwenkt, so daß es ausgehend vom Förderabschnitt 15" schräg nach unten in die Nähe des Bodens 13''' des Bunkers 13 reicht. Dieser Zustand ist in der Figur 3 dargestellt.

Die über den Förderabschnitt 15" auf das Füllband 21 geförderten Kartoffeln 6 werden dann mit dem Füllband 21 sanft in den Bunker abgelegt, so daß sich ein Kartoffelberg bzw. Schüttkegel 30 mit zunehmenden Volumen bildet. Das Füllband 21 ist hierfür in Förderrichtung D' angetrieben.

Mit dem Wachsen des sich ausbildenden Kartoffelhaufens 30 wird zunächst das Füllband 21 um die Gelenke 23 nach oben geschwenkt, und zwar solange, bis der in der Figur 3 mit 30a bezeichnete Schüttkegel erreicht ist, dessen maximale Höhe bereits der maximalen Füllhöhe des Bunkers 13 entspricht. Um diesen Schüttkegel 30a, der sich durch das Abrollen der eingebrachten Kartoffeln 5 auch bereits in Richtung zur Vorderseite 13" gebildet hat, in dieser Richtung weiterzuführen, d.h. dem Bunker 13 auch in Richtung zu seiner Vorderseite 13" hin zu füllen, wird bei weiterhin angehobenen und in Förderrichtung C' angetriebenenen Füllband 21 dieses kontinuierlich mit dem Einbringen der Kartoffeln 6 durch eine entsprechend gesteuerte Bewegung des Füllbandrahmens 22 in Richtung Bunkervorderseite 13" (Pfeil E") bewegt, so daß schließlich ein Füllstand erreicht ist, der durch den Schüttkegel 30b angedeutet ist und bei dem sich dieser Schüttkegel auch bereits in der Mitte zwischen der Bunkerrückseite 13' und Bunkervorderseite 13" ausgebildet ist, also dort, wo die Lager 28 vorgesehen sind.

Der Füllbandrahmen 22 befindet sich dann in einer Endstellung, in der das freie Ende des Füllbandes 28 den Lagern 28 benachbart ist, während das mit den Gelenken 23 verbundene Ende des Füllbandes 21 nunmehr nach links von den Lagern 28 wegsteht.

Zum Füllen auch das vorderen Bereichs des Bunkers 17 wird der Füllbandrahmen 22 nunmehr wiederum in seine Ausgangsstellung zurückbewegt (Pfeil E'), in der das freie Ende des Füllbandes 21 den größten Abstand von den Lagern 28 aufweist. Das Füllband 21 ist weiterhin in seine oberste Stellung geschwenkt. Dieser Zustand ist in der Figur 5 dargestellt. Das Füllband 21 wird nun so angetrieben, daß dessen Förderrichtung in Richtung vom freien Ende des Füllbandes 21 zu den Lagern 28 hin verläuft (Pfeil D"). Die über dem Förderabschnitt 15" auf das Füllband 21 gelangenden Kartoffeln 6 werden nunmehr auf den Schüttkegel 30b abgelegt. Mit zunehmenden Annähern dieses Schüttkegels an die Bunkervorderseite 13" wird auch wiederum der Füllbandrahmen 22 zunehmend in Richtung Bunkervorderseite 13" bewegt (Pfeil E"). Das Füllen des Bunkers 13 ist abgeschlossen, wenn der Füllbandrahmen 21 die in der Figur 4 dargestellte Stellung erreicht hat.

Die Steuerung des Füllförderers 20 kann beispielsweise manuell durch optische Beobachtung des Bunkers 13 durch den Fahrer der Erntemaschine 1 erfolgen. Dadurch, daß der Motor 14 am Heck des Hinterrahmens 2" vorgesehen ist, ist der Bunker 13 von der Fahrerkabine 4 gut einsehbar. Bevorzugt erfolgt die Steuerung des Füllförderers 20 aber automatisch, beispielsweise unter Berücksichtigung von SteuerSignalen, die von Sensoren, beispielsweise Lichtschranken geliefert werden, die den jeweiligen Füllzustand des Bunkers, insbesondere auch die Ausbildung der Schüttkegel überwachen. Derartige Sensoren beispielsweise in Form von Lichtschranken sind z.B. an dem freien Ende des Füllbandes 21 bzw. dessen dortigen Tragrahmens 21' vorgesehen, wie mit 31 angedeutet, und/oder an dem den freien Ende des Füllbandes abgewandten Ende des Füllbandrahmens 22, wie mit 32 angedeutet. Mit der Lichtschranke 31 wird also das Schwenken des Füllbandes 21 aus der untersten Stellung nach oben und das anschließende Bewegung des Füllbandrahmens 22 in Richtung des Pfeiles E" bei in der ersten Förderrichtung D' förderndem Füllband 21 gesteuert. Mit der Lichtschranke 32 wird dann das erneute Bewegen des Füllbandrahmens 22 in Richtung des Pfeiles E" bei in der zweiten Förderrichtung D" fördernden Füllband 21 zum Füllen des vorderen Bereichs des Bunkers 13 gesteuert.

Die Lager 28 sind jeweils an zwei Rahmenteilen 33' gehalten, mit denen auch der obere Teil des Aufwärtsförderers 15 bzw. des Förderabschnittes 15' und der Förderabschnitt 15" verbunden sind. Die Rahmenteile 33' sind Bestandteil eines hebund senkbaren Rahmens 33, mit dem der Aufwärtsförderer 15 sowie auch der Füllförderer 20 zwischen einem angehobenen Arbeitszustand beim Ernten bzw. Roden auf einem Feld und einem abgesenkten Zustand zum Fahren auf öffentlichen Straßen und Wegen mit einer die maximal zulässige Höhe nicht überschreitenden Fahrzeughöhe auf- und abbewegbar ist.

Wie die Figur 1 zeigt, befindet sich sowohl der Abschnitt 15" des Aufwärtsförderers, als auch die Bewegungsbahn 29 des Füllförderers 20 bzw. des Füllbandrahmens 22 über der oberen, offenen Seite des Bunkers 13. Im abgesenkten Zustand ist auf jeden Fall der Füllförderer 20 im Bunker 13 aufgenommen.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Erntemaschine
- 2: Fahrzeugrahmen
- 2': Vorderrahmen
- 2": Hinterrahmen
- 3: Gelenkanordnung
- 4: Fahrerkabine
- 5: Ernte- oder Rodeaggregat
- 6: Kartoffel
- 7: Vorderachse
- 8: Rad
- 9, 10: Hinterachse
- 11, 12: Rad
- 13: Bunker
- 13': Bunkerrückseite
- 13": Bunkervorderseite
- 13"': Bunkerboden
- 14: Antriebsmotor
- 15: Elevator bzw. Aufwärtsförderer
- 15', 15", 15"': Förderabschnitt
- 16: Förderstrecke
- 17: Förderband
- 17': Förderbandabschnitt
- 18: Förderband
- 18': Förderbandabschnitt
- 19: Mitnehmer
- 20: Füllförderer
- 21: Füllband
- 21': Tragrahmen
- 21": Umlenkwalze
- 21''': Bandelement
- 21"": Mitnehmer
- 22: Füllbandrahmen
- 22': Rahmenelement
- 23: Gelenk
- 24: Antrieb
- 25, 26, 27: Rolle
- 28: Lager
- 29: Bewegungsbahn
- 30, 30a, 30b: Schüttkegel
- 31, 32: Lichtschranke
- 33: heb- und senkbarer Rahmen
- 33': Rahmenteil

## Patentansprüche

1. Erntemaschine zum Ernten bzw. Roden von Wurzelfrüchten, insbesondere Kartoffeln, mit wenigstens einem an einem Fahrzeugrahmen (2) vorgesehenen, an einer Oberseite offenen Bunker (13) sowie mit einem an die offene Seite des Bunkers (13) reichenden Zuförderer, beispielsweise Aufwärtsförderer (15) zum Zuführen der geernteten Hackfrüchte an eine Belade- oder Füllposition an der offenen Oberseite des Bunkers (13), wobei an die Beladeposition des wenigstens einen Zuförderers (15) anschließend wenigstens ein Förderelement (21) eines Füllförderers (20) vorgesehen ist, welches um eine horizontale oder annähernd horizontale Achse (23) senkrecht zu seiner Förderrichtung (G', G") schwenkbar ist, und zwar wenigstens zwischen einer dem Boden (13''') des Bunkers (13) nahen Position und einer diesem Boden (13''') fernen Position, **dadurch gekennzeichnet, daß** das Förderelement (21) des Füllförderers (20) in einer Achsrichtung senkrecht zur Schwenkachse (32) zwischen einer Seite (13') und einer gegenüberliegenden Seite (13") des Bunkers (13) für eine Lateralbewegung bewegbar ist.

2. Erntemaschine nach Anspruch 1, **dadurch gekennzeichnet, daß** das Förderelement (21) des Füllförderers (20) ein Förderband oder Füllband (21) ist.

3. Erntemaschine nach Anspruch 1 oder 2, **dadurch gekennzeichnet, daß** das Förderelement (21) des Füllförderers (20) zwischen einer Rückseite (13') und einer Vorderseite (13") des Bunkers (13) verschiebbar geführt ist.

4. Erntemaschine nach einem der vorhergehenden Ansprüche, **dadurch gekennzeichnet, daß** der wenigstens eine Zuförderer ein Aufwärtsförderer oder Elevator (15) ist, der einen über dem Förderelement (21) des Füllförderers (20) endenden Förderabschnitt (15") bildet.

5. Erntemaschine nach einem der vorhergehenden Ansprüche, **dadurch gekennzeichnet, daß** das Förderelement (21) des Füllförderers (20) an einem Ende schwenkbar gehalten ist.

6. Erntemaschine nach einem der vorhergehenden Ansprüche, **dadurch gekennzeichnet, daß** das Förderelement (21) des Füllförderers (20) an einem Rahmen (22) um die Gelenkachse (23) schwenkbar vorgesehen ist, der (Rahmen) für die Verschiebe- oder Lateralbewegung beweglich vorgesehen ist.

7. Erntemaschine nach einem der vorhergehenden Ansprüche, **dadurch gekennzeichnet, daß** das Förderelement (21) des Füllförderers (20) in einem Förderelement- oder Förderbandrahmen (22) um die Gelenkachse (23) schwenkbar vorgesehen ist, und daß der Förderelementrahmen (22) für die Lateralbewegung in der zweiten Achsrichtung (E) verschiebbar vorgesehen ist.

8. Erntemaschine nach einem der vorhergehenden Ansprüche, **dadurch gekennzeichnet, daß** das Förderelement (21) des Füllförderers (20) in der ersten und zweiten Position seiner Verschiebe- oder Lateralbewegung mit dem einen bzw. mit dem anderen Ende unter der Aufgabeposition des Zuförderers (15) angeordnet ist.

9. Erntemaschine nach einem der vorhergehenden Ansprüche, **dadurch gekennzeichnet, daß** der Träger oder Rahmen (22) für die Verschiebebewegung an Lagern (28) geführt ist.

10. Erntemaschine nach einem der vorhergehenden Ansprüche, **dadurch gekennzeichnet, daß** der Rahmen oder Träger für die Verschiebe- oder Lateralbewegung auf einer an der Oberseite konkav gekrümmten Bahn bewegbar ist, die um wenigstens eine parallel zur Gelenkachse (23) verlaufende Achse gekrümmt ist.

11. Erntemaschine nach einem der vorhergehenden Ansprüche, **gekennzeichnet durch** Antriebe für die Schwenkbewegung und Verschiebebewegung des Förderelementes (21) des Füllförderers (20) und/oder
**durch** Mittel oder Sensoren (31, 32), die die Schwenkbewegung und/oder die Verschiebebewegung des wenigstens einen Förderelementes (21) des Füllförderers (20) in Abhängigkeit von dem Füllzustand des Bunkers (13) steuern.

12. Erntemaschine nach einem der vorhergehenden Ansprüche, **dadurch**
**gekennzeichnet, daß** die Förderrichtung des Förderelementes (21) des Füllförderers (20) umkehrbar ist.

13. Erntemaschine nach einem der vorhergehenden Ansprüche, **dadurch gekennzeichnet, daß** das Förderelement (21) des Füllförderers (20) in einer ersten Position der Verschiebebewegung mit einem Ende der einen Seite (13') und in einer zweiten Position der Verschiebebewegung mit seinem anderen Ende der anderen Seite (13") des Bunkers (13) benachbart angeordnet ist.

14. Erntemaschine nach einem der vorhergehenden Ansprüche, **gekennzeichnet durch** ein an der Vorderseite des Fahrzeugrahmens (2) vorgesehenes Ernte- oder Rodeaggregat (5) und eine Förderstrecke (16) zwischen diesem Rodeaggregat und einer Aufnahmeposition des Zuförderers (15), an der die Hackfrüchte von der Förderstrecke (16) an den Zuförderer (15) übergeben werden.

15. Erntemaschine nach einem der vorhergehenden Ansprüche, **dadurch gekennzeichnet,**
**daß** die Aufgabeposition des Zuförderers (15) in der Mitte oder etwa in der Mitte zwischen den beiden einander gegenüberliegenden Seiten (13', 13") des Bunkers (13) vorgesehen ist, und/oder
**daß** der Füllförderer (20) vorzugsweise zumindest mit einem Teil des Zuförderers (15) anhebbar und absenkbar am Bunker (13) oder an der Erntemaschine (1) vorgesehen ist, und/oder
**daß** der Fahrzeugrahmen zweiteilig ausgeführt ist, und zwar mit einem Vorderrahmen (2') und einem Hinterrahmen (2"), wobei am Vorderrahmen das Rodeaggregat (5) sowie wenigstens ein Fahrstand (4) und am Hinterrahmen (2") der Bunker (13) vorgesehen sind, und/oder
**daß** der Vorderrahmen (2') und der Hinterrahmen (2") über eine Gelenkeeinrichtung (3) gelenkig miteinander verbunden sind, und/oder
**daß** am Hinterrahmen (2") ein Antriebsmotor (14) für die selbstfahrende Erntemaschine (1) vorgesehen ist.
